(19) **Europäisches Patentamt / European Patent Office / Office européen des brevets**

(11) **EP 1 867 061 B1**

(12) **EUROPEAN PATENT SPECIFICATION**

(45) Date of publication and mention
of the grant of the patent:
**07.08.2013 Bulletin 2013/32**

(51) Int Cl.:
**H04B 1/50** (2006.01)     **H04B 1/00** (2006.01)

(21) Application number: **06768688.1**

(22) Date of filing: **30.05.2006**

(86) International application number:
**PCT/KR2006/002060**

(87) International publication number:
**WO 2006/135159 (21.12.2006 Gazette 2006/51)**

(54) **FRONT END MODULE AND FABRICATING METHOD THEREOF**

EINGANGSMODUL UND HERSTELLUNGSVERFAHREN DAFÜR

MODULE FRONTAL ET SA METHODE DE FABRICATION

(84) Designated Contracting States:
**DE FI GB**

(30) Priority: **17.06.2005  KR 20050052216**

(43) Date of publication of application:
**19.12.2007  Bulletin 2007/51**

(73) Proprietor: **LG Innotek Co., Ltd
Seoul 150-721 (KR)**

(72) Inventor: **LEE, Sang Hun
Uiwang-si,
Gyeonggi-do 437-120 (KR)**

(74) Representative: **Novagraaf Technologies
122 rue Edouard Vaillant
92593 Levallois-Perret Cedex (FR)**

(56) References cited:
**US-A1- 2004 248 539     US-B2- 6 600 385
US-B2- 6 788 958     US-B2- 6 876 273**

**Description**

[Technical Field]

The present invention relates to a front end module of a mobile communication terminal and a method of fabricating the front end module.

[Background Art]

With the development of mobile communication systems, use of mobile communication terminals, such as cellular phones and personal digital assistants, is rapidly popularized, and transceiver systems operable in frequency bands such as 800 MHz to 1 GHz, and 1.5 GHz to 2.0 GHz are provided for the mobile communication systems.
As high-performance and small-sized mobile communication terminals are being developed, integrated, small-sized, and light-weighted components are being developed.
Further, new communication methods are being developed for the mobile communication terminals. For example, multiband antennas have been developed for communicating in different frequency bands using a single antenna or multiband front end modules (FEMs) with integrated components have been developed for transmitting and receiving signals over multiple frequency bands.

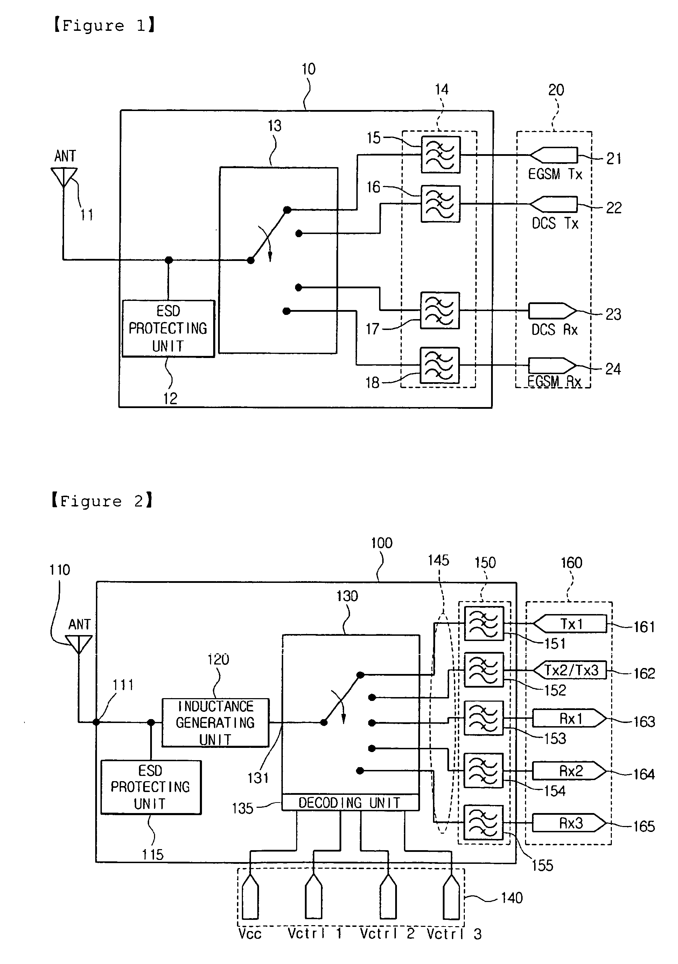

FIG. 1 is a block diagram illustrating a dual band FEM 10 of the related art.
Referring to FIG. 1, the FEM 10 is disposed between an antenna 11 and a transceiver end 20. The FEM 10 includes an electrostatic discharge (ESD) protecting unit 12, an RF switching unit 13, and a filtering unit 14.
The ESD protecting unit 12 protects the RF switching unit 13 from electrostatic discharge input from an input end of the antenna 11 is connected to a DCS Tx terminal 22. The first SAW filter 17 is connected to a DCS Rx terminal 23, and the second SAW filter 18 is connected to an EGSM Rx terminal 24.
RF signals transmitted/received through the FEM 10 are attenuated while passing through components such as the antenna 11, the RF switching unit 1.3, and the filtering unit 14 due to the insertion loss caused by these components. The insertion loss has an undesirable effect on transmitting and receiving signals, thereby decreasing the reliability of a communication terminal using the FEM 10.
Although a chip inductor or a chip capacitor can be used between the antenna 11 and the RF switching unit 13 to decrease the insertion loss in the FEM 10, the use of such a chip may result in malfunction of the of the FEM 10 due to the parasitic component of the chip and electrostatic discharge at the input end of the antenna 11. In addition, the malfunction of the FEM 10 may reduce the life span and reliability of the FEM 10.
United States publication No. US 2004/248539 A1 discloses a high frequency module including a switching circuit having a phase-shift circuit.
United States patent No. US 6,600,385 B2 discloses a front end module composed of a multilayer substrate and surface mounted components. The front end module constitutes antenna switches, filters and a high frequency circuit comprising a band splitter circuit and the front end of the transceiver circuit is equipped with a plurality of transmission/reception features.

**Disclosure of Invention**

**Technical Problem**

The present invention provides a front end module that can reduce insertion loss by generating inductive peaking at a multiband in-band frequency, and a method of fabricating the front end module.

**Technical Solution**

The present invention provides a front end module including a wire connected to an antenna to generate a predetermined inductance for causing resonance within a predetermined frequency range, and a method of fabricating the front end module.
Also, The present invention provides a front end module including a wire connected to an antenna and another wire connected to a filtering unit to allow resonance at a predetermined frequency, and a method of fabricating the front end module.

**Advantageous Effects**

According to the front end module of the present invention and the method of fabricating the front end module, a wire is used to make an LC resonance together with a parasitic capacitance in the front end module so as to reduce insertion loss at a multiband in-band frequency.

Further, the front end module can have a simple structure and thus the fabricating method of the front end module is simple.

Furthermore, communication terminals can have an improved reliability by using the frond end module of the present invention.

**Brief Description of the Drawings**

FIG. 1. is a block diagram of a dual band front end module (FEM) according to the FEM 10.

[Disclosure]

[Technical Problem]

The present invention provides a front end module that can reduce insertion loss by generating inductive peaking at a multiband in-band frequency, and a method of fabricating the front end module.

[Technical Solution]

The present invention provides a front end module including a wire connected to an antenna to generate a predetermined inductance for causing resonance within a predetermined frequency range, and a method of fabricating the front end module.

Also, The present invention provides a front end module including a wire connected to an antenna and another wire connected to a filtering unit to allow resonance at a predetermined frequency, and a method of fabricating the front end module.

[Advantageous Effects]

According to the front end module of the present invention and the method of fabricating the front end module, a wire is used to make an LC resonance together with a parasitic capacitance in the front end module so as to reduce insertion loss at a multiband in-band frequency.

Further, the front end module can have a simple structure and thus the fabricating method of the front end module is simple.

Furthermore, communication terminals can have an improved reliability by using the frond end module of the present invention.

[Description of Drawings]

FIG. 1 is a block diagram of a dual band front end module (FEM) according to the related art.
FIG. 2 is a block diagram of an FEM according to an embodiment of the present invention.
FIG. 3 is a cross-sectional view of an FEM according to an embodiment of the present invention.
FIG. 4 is a gain-frequency graph for different wire lengths.
FIG. 5 is an S parameter-frequency graph of the FEM for different wire lengths to show insertion loss reduction in an EGSM Tx band with respect to the wire length according to an embodiment of the present invention.
FIG. 6 is an S parameter-frequency graph of the FEM for different wire lengths to show insertion loss reduction in DCS and PCS Tx band with respect to the wire length according to an embodiment of the present invention.

[Best Mode]

A front end module (FEM) and a method of fabricating the FEM will now be described with reference to the accompanying drawings, in which exemplary embodiments of the invention are shown.

Referring to FIG. 2, an FEM 100 is attached to a transceiver end 160 of a communication terminal for transmitting and receiving signals in multiple bands.

The FEM 100 may be a dual band, a triple band, or a quadruple band FEM. For example, the FEM 100 can be designed to transmit and receive signals over at least two of relatively low frequency bands and high frequency bands.

Examples of the low frequency bands include a global systems for mobile communication (GSM) band and an extend global systems for mobile communication (EGSM) band, and examples of the high frequency bands include a digital cellular system (DCS) band and a personal communication service (PCS) band.

The FEM 100 is disposed between an antenna 110 and the transceiver end 160. The FEM 100 includes an electrostatic discharge (ESD) protecting unit 115, an inductance-generating unit 120, an RF switching unit 130, a decoding unit 135, and a filtering unit 150.

The ESD protecting unit 115 protects the RF switching unit 130 and other components in the FEM 100 from electrostatic discharge input from an input end 111 of the antenna 110.

The inductance-generating unit 120 electrically connects the input end 111 of the antenna 110 to the RF switching unit 130. The inductance-generating unit 120 generates an inductance. The inductance of the input end 111 of the antenna 110 is controlled by the inductance-generating unit 120.

The inductance generated by the inductance-generating unit 120 makes LC resonance together with a parasitic capacitance component generated between the input end 111 of the antenna 110 and an input end 131 of the RF switching unit 130.

Here, the magnitude of the inductance generated by the inductance-generating unit 120 may be influenced by the magnitude of the parasitic capacitance component. Therefore, the parasitic capacitance component is previously measured between the input end 111 of the antenna 110 and an input end 131 of the RF switching unit 130, and then the magnitude of the inductance of the inductance-generating unit 120 is determined based on the measured result.

The inductance-generating unit 120 may be formed of a wire. In this case, since the inductance of the inductance-generating unit 120 is proportional to the length of the wire, LC resonance can arise within a predetermined frequency range by selecting the length of the wire in consideration of the measured magnitude of the parasitic capacitance component. Accordingly, an inductive peaking phenomenon can be used at a multiband in-band frequency range.

As explained above, the inductance of the inductance-generating unit 120 and the parasitic capacitance component can make LC resonance at a predetermined frequency band. That is, the LC resonance frequency can be placed within a multiband in-band frequency range, so that insertion loss can be reduced in a desired frequency band. Here, the multiband in-band frequency includes Tx or Rx frequencies of GSM, EGSM, DCS, and PCS bands.

The RF switching unit 130 has a 1:n switching (SPnT) structure such as SPDT (single pole double throw), SP4T, and SP5T. The FEM 100 can include one or more RF switching units. The RF switching unit 130 performs a switching operation to select channel for transmitting or receiving an RF signal through the antenna 110.

The decoding unit 135 controls the switching operation and other operations of the RF switching unit 130. The decoding unit 135 receives main power voltage Vcc and control voltages Vctr 1, Vctr 2, and Vctr 3 from a power supplying unit 140. The decoding unit 135 drives the RF switching unit 130 using the main power Vcc and controls the switching operation of the RF switching unit 130 using the control voltages Vctr 1, Vctr 2, and Vctr 3. Here, the number of the control voltages can vary according to the number of Tx/Rx channels of the RF switching unit 130.

The filtering unit 150 is disposed between the RF switching unit 130 and the transceiver end 160 to filter RF signals transmitted or received over multiple bands. For this, the filtering unit 150 includes a first low pass filter (LPF) 151, a second LPF 152 (at least two LPFs), a first SAW filter 153, a second SAW filter 154, and a third SAW filter 155. The first LPF 151 filters RF signals transmitted from an EGSM Tx terminal (Tx1) 161, and the second LPF 152 filters RF signals transmitted from a DCS/PCS Tx terminal (Tx2/Tx3) 162. The first SAW filter 153 filters RF signals and sends the RF signals to an EGSM Rx terminal (Rx1) 163, and the second SAW filter 154 filters RF signals and sends the RF signals to an DCS Rx terminal (Rx2) 164, and the third SAW filter 155 filters RF signals and sends the RF signals to a PCS Rx terminal (Rx3) 165. Here, the SAW filters 153, 154, and 155 are band-pass filters that pass frequencies only within a selected band.

The RF switching unit 130 is electrically bonded to the respective filters 151 to 155 by a connecting member 145. The connecting member 145 may be a wire or bonding pattern, or the like.

The transceiver end 160 includes the EGSM Tx1 161, DCS/PCS Tx2/Tx3 162, EGSM Rx1 163, DCS Rx2 164, and PCS Rx3 165. The transceiver end 160 receives filtered RF signals from the FEM 100 or transmits RF signals to the FEM 100. The transceiver end 160 may further include a GSM Tx terminal and a GSM Rx terminal for operating in a GSM band.

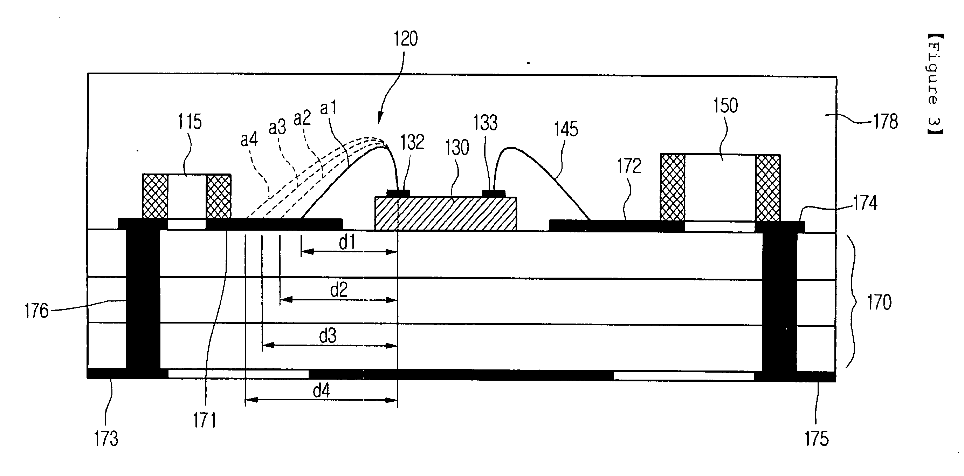

FIG. 3 is a cross-sectional view of the FEM 100 depicted in FIG. 2.

Referring to FIG. 3, the ESD protecting unit 115 and the filtering unit 150 are mounted on a FEM substrate 170 by surface mounting, and the RF switching unit 130 is mounted on the FEM substrate 170 by die attachment using a conductive epoxy resin.

The FEM substrate 170 may have a multi-layer structure. Preferably, the FEM substrate 170 may be formed using a printed circuit board (PCB) or a low temperature co-fired ceramic (LTCC) board.

The inductance-generating unit 120 may be formed of at least one wire a1. When the inductance-generating unit 120 is formed of two or more wires, the wires may have the same length or different lengths.

Both ends of the wire a1 are respectively bonded to bonding pads (or electrode pads) 171 and 132. The bonding pads 171 and 132 generate a parasitic capacitance, and the magnitude of the parasitic capacitance is proportional to the sizes of the bonding pads 171 and 132.

The bonding pad 171 is connected to the input end 111 of the antenna 110, and the bonding pad 132 is connected to the RF switching unit 130. The bonding pad 171 is formed on the FEM substrate 170 in electrical connection with the input end 111 of the antenna 110 and the ESD protecting unit 115.

The inductance-generating unit 120 generates an inductance that can be adjusted based on the distance d1 between both ends of the wire a1 bonded to the bonding pads 171 and 132. For example, the length of the wire a1 can be adjusted to a desired value by varying the distance between both ends of the wire a1 from d1 to d4. When the inductance-generating unit 120 is formed of two or more wires, the total inductance generated by the inductance-generating unit 120 may be determined as the sum of inductances generated by the respective wires.

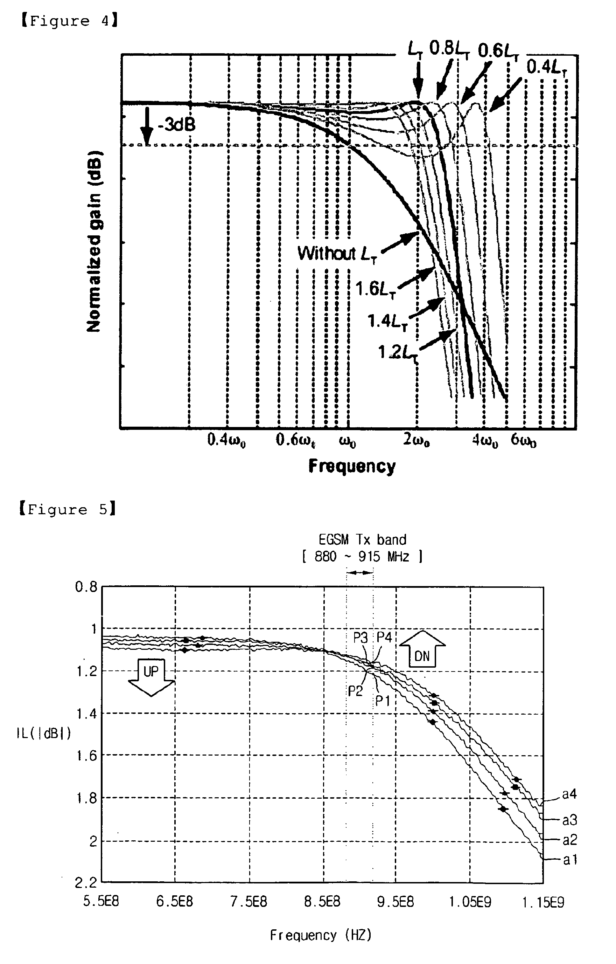

FIG. 4 is a gain-frequency graph obtained by adding the wire a1 to the input end 111 of the antenna 110 as the inductance-generating unit 120. Referring to FIG. 4, the inductance of the wire a1 varies according to it length.

The wire a1 can generate an inductance with a high quality when a parasitic component is low. Generally, the wire a1 may generate an inductance of about 1 nH per 1 mm.

An inductance calculation equation can be expressed as follows.

$$ L(nH)\bigl(2\mathrm{s}l[\ln(2l/r)-1.0] $$

where "l" denotes the length of the wire a1 in centimeters and "r" denotes the radius of the wire a1 in centimeters.

For example, when l = 1 mm and r = 12.7 $\mu$m, 0.8 nH/mm is calculated using the equation. The length of the wire a1 can be adjusted from 0.5 mm to 1.5 mm according to the magnitude of parasitic capacitance or multiband in-band frequency range.

The wire a1 (the inductance-generating unit 120) is both used as a circuit connecting member and an inductive peaking phenomenon generating member.

The parasitic capacitance of the bonding pads 171 and 132 and the inductance of the wire a1 make LC resonance at a specific frequency range. Therefore, the inductive peaking phenomenon can be used at a specific frequency such as an in-band Tx frequency or an in-band Rx frequency.

The inductance and length of the wire a1 (the inductance-generating unit 120) correspond to the parasitic capacitance of the bonding pads 171 and 132.

The FEM 100 can transmit signals with less insertion loss by setting the LC resonance frequency made by the inductance of the inductance-generating unit 120 and the capacitance of the bonding pads 171 and 132 to the multiband in-band Tx or Rx frequency.

Since the bonding pads 171 and 132 to which the wire a1 is bonded are presented as a parallel capacitor generating a parasitic capacitance, a third-order peaking filter can be formed by the parallel capacitor-serial inductor-parallel capacitor structure. The third-order peaking filter can produce inductive peaking in a pass band. That is, the inductance of the wire a1 can be adjusted by changing the length of the wire a1 to place the LC resonance frequency near the in-band frequency range.

The inductance-generating unit 120 can be formed on the FEM substrate 170 in the form of a bonding pattern. That is, the inductance-generating unit 120 may be a metal pattern formed on the FEM substrate 170 between the bonding pad 171 and the bonding pad 132 of the RF switching unit 130.

The RF switching unit 130 is connected to a bonding pad 172 of the filter unit 150 through the connecting member 145 such as wires. The connecting wires 145 are connected between the RF switching unit 130 and the filters of the filter unit 150, respectively, such that the inductance difference between frequency bands can be compensated for by adjusting the lengths the connecting wires 145. That is, minor change is allowable for high band and low band.

The RF switching unit 130 and the filtering unit 150 can be mounted on the FEM substrate 170 in the form of a chip or a package.

For this, the FEM substrate 170 includes via holes 176 allowing electric connections between layers, a solder pad 174 receiving surface mount components, output terminals 173 and 175 formed on a bottom surface, and a cap or protective layer 178 formed on a top surface using an epoxy resin.

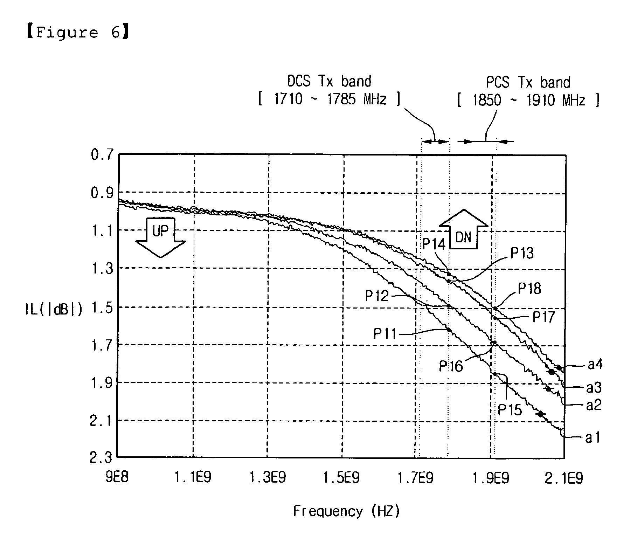

FIGS. 5 and 6 show S parameter (S21) versus frequency curves of the FEM 100 for wire lengths a1, a2, a3, and a4 to show insertion loss reduction with respect to the wire length in EGSM, DCS, and PCS Tx bands. Here, the S parameter (insertion loss (IL)) curves are drawn by taking absolute values, and the wire lengths a1 = 0.6 mm, a2 = 0.8 mm, a3 = 1.0 mm, and a4 = 1.2 mm.

Referring to FIG. 5, in the EGSM Tx band, S21 is 1.22 dB at a point P1 for the wire length a1, S21 is 1.19 dB at a point P2 for the wire length a2, S21 is 1.18 dB at a point P3 for the wire length a3, and S21 is 1.16 dB at a point P4 for the wire length a4. Therefore, the insertion loss (IL) decreases (DN: down) as the wire length increases because inductive peaking increases in the EGSM band in proportional to the wire length.

Referring to FIG. 6, in the DCS transmitting band, S21 is 1.62 dB at a point P11 for the wire length a1, S21 is 1.49 dB at a point P12 for the wire length a2, S21 is 1.36 dB at a point P13 for the wire length a3, and S21 is 1.32 dB at a point' P14 for the wire length a4. Therefore, the insertion loss (IL) decreases (DN: down) as the wire length increases because inductive peaking increases in the DCS band in proportional to the wire length.

In the PCS transmitting band, S21 is 1.86 dB at a point P15 for the wire length a1, S21 is 1.69 dB at a point P16 for the wire length a2, S21 is 1.54 dB at a point P17 for the wire length a3, and S21 is 1.50 dB at a point P18 for the wire length a4. Therefore, the insertion loss (IL) decreases (DN: down) as the wire length increases because inductive peaking increases in the DCS band in proportional to the wire length.

As shown in FIGS. 5 and 6, although the insertion loss (IL) increases (UP) in an unnecessary lower frequency band as the wire length increases from a1 to a4 since the inductance of the wire increases in proportional to the wire length, the insertion loss (IL) decreases (DN) in the signal pass band, such as EGSM Tx band (880 to 915 MHz), DCS Tx band (1710 to 1785 MHz), and PCS Tx band (1850 to 1910 MHz), owing to the inductive peaking.

As described above, the wire inductance increases as the length of the wire increases between the antenna and the RF switching unit, and thus the insertion loss decreases for both output powers in the Tx band of below 1 GHz and in the Tx band of below 2 GHz.

According to the present invention, the design of the FEM module can be focused on the high frequency Tx bands (DCS and PCS) instead of both high frequency Tx bands (DSC and PCS) and low frequency Tx bands (GSM and EGSM). When the optimal wire length for the low frequency bands is not equal to that for the high frequency bands, the wire length can be determined depending on the high frequency bands since the insertion loss is more critical for the output power in the high frequency transmitting bands than in the low frequency transmitting bands.

Further, the connecting wires connecting the RF switching unit 130 and the respective filters of the filtering unit can be adjusted to compensate for the inductance related to the LC resonance frequency for each frequency band.

Furthermore, the transmitting characteristics can be improved by focusing the adjustment of the wire length on the in-band Tx frequency, and then the Rx characteristics can be improved by externally adjusting output impedances of the SAW filters of the filtering unit in accordance with the resulting change in the input impedance of the antenna.

It will be apparent to those skilled in the art that various modifications and variations can be made in the present invention. Thus, it is intended that the present invention covers the modifications and variations of this invention provided they come within the scope of the appended claims and their equivalents.

[Industrial Applicability]

In the FEM and the method of fabricating the FEM according to the present invention, a wire is used as an inductance-generating unit to make LC resonance together with the parasitic capacitance of the FEM, so that insertion loss can be reduced in a multiband in-band frequency range.

Further, the FEM can be simply fabricated since an additional inductor is not required.

Furthermore, the reliability of communication terminals can be improved by using the FEM of the present invention.

**Claims**

1.    A front end module (FEM) comprising:

   a substrate (170);
   an RF switching unit(130) switching of a multiband RF signal between Tx and Rx channels and mounted on the substrate (170); and
   a wire (120, a1) electrically connecting the RF switching unit (130) and an input end (111) of an antenna (110); and
   a filter unit (150) disposed connected to the RF switching unit (130), **characterized in that**
   the wire (120, a1) is connected one end to a bonding pad (171) of the input end (111) of the antenna (110) and the other end is connected to a bonding pad (132) of the RF switching unit (130), and
   the wire (120, a1) generates an inductance that interacts with a parasitic capacitance measured between both ends of the wire for making an LC resonance in a predetermined frequency band.

2.    The front end module according to claim 1, wherein the substrate comprises a low temperature co-fired ceramic (LTCC) board.

3. The front end module according to claim 1 or 2, wherein the inductance of the wire is an inductance of an input end of the antenna.

4. The front end module according to any one of claims 1 to 3, wherein the inductance of the wire is changed according to a length of the wire.

5. The front end module according to any one of claims 1 to 4, wherein the predetermined frequency band comprises a Tx or Rx in-band frequency.

6. The front end module according to any one of claims 1 to 5, wherein the wire comprises two or more wires.

7. The front end module according to any one of claims 1 to 6, further comprising an electrostatic discharge (ESD) protecting unit protecting inner components from an electrostatic discharge input from an input end of the antenna (110).

8. The front end module according to any one of claims 1 to7, further comprising:

   at least one low pass filter (LPF) (151,152) filtering the RF signal when the RF signal is switched to the Tx channel by the RF switching unit; and
   at least one surface acoustic wave (SAW) filter(153, 154, 155) filtering the RF signal when the RF signal is switched to the Rx channel by the RF switching unit (130).

9. The front end module according to any one of claims 1 to 8, further comprising a decoding unit (135) controlling the switching operation and other operations of the RF switching unit (130).

10. The front end module according to any one of claims 1 to 9, wherein the multiband RF signal comprises at least two of a global systems for mobile communication (GSM) band RF signal, an extend global systems for mobile communication (EGSM) band RF signal, a digital cellular system (DCS) band RF signal, and a personal communication service (PCS) band RF signal.

11. The front end module according to any one of claims 1 to 10, further comprising a protective layer (178) on a top surface of the substrate (170).

12. The front end module according to any one of claims 1 to 11, wherein the wire has the length of about 0.5 mm to about 1.5 mm.

13. The front end module according to any one of claims 1 to 12 , wherein the wire is formed of gold or aluminum.

14. The front end module according to claim 4, wherein the inductance of the wire makes an LC resonance at an in-band frequency together with the parasitic capacitance.

15. The front end module according to claim 14, wherein the wire has a length corresponding to the parasitic capacitance.

16. The front end module according to claim 8, wherein the wire is a first wire, and the LPF or SAW filters respectively connected to Tx or Rx channels of the RF switching unit through second wires (145).

17. The front end module according to claim 16, wherein an inductance difference between frequency bands compensates by the lengths of the second wires (145).

18. The front end module according to any one of claims 1 to 17, wherein a magnitude of the parasitic capacitance is proportional to the sizes of the bonding pads (171, 132).

19. A method of fabricating a front end module, comprising:

   mounting a multiband RF switching chip (130) on a substrate (110); and
   mounting a filter unit (150) on the substrate (110);
   connecting one end of a wire (120, a1) to a bonding pad (171) of an input end (111) of an antenna (110) and the other end to a bonding pad (132) of the RF switching unit (130),

wherein the inductance of the wire (120, a1) is changed according to the length of the wire,
wherein the inductance of the wire (120, a1) interacts with a parasitic capacitance of the bonding pads for making an LC resonance at a multiband in-band Tx or Rx frequency.

**Patentansprüche**

1.  Frontmodul (FEM), umfassend:

    ein Substrat (170);
    eine RF-Schalteinheit (130), die ein Mehrband-RF-Signal zwischen Tx- und Rx-Kanälen umschaltet und auf dem Substrat (170) montiert ist; und
    einen Draht (120, a1), der die RF-Schalteinheit (130) und ein Eingangsende (111) einer Antenne (110) elektrisch verbindet; und
    eine Filtereinheit (150), die angeordnet ist, indem sie mit der RF-Schalteinheit (130) verbunden ist,

    **dadurch gekennzeichnet, dass**
    der Draht (120, a1) an einem Ende mit einer Anschlussfläche (171) des Eingangsendes (111) der Antenne (110) verbunden ist und mit dem anderen Ende mit einer Anschlussfläche (132) der RF-Schalteinheit (130) verbunden ist, und
    der Draht (120, a1) eine Induktivität generiert, die mit einer parasitären Kapazität interagiert, die zwischen den beiden Enden des Drahtes gemessen wird, um in einem vorbestimmten Frequenzband eine LC-Resonanz zu bilden.

2.  Frontmodul nach Anspruch 1, wobei das Substrat eine auf Tieftemperatur gesinterte Keramik- (LTCC) Platte umfasst.

3.  Frontmodul nach Anspruch 1 oder 2, wobei die Induktivität des Drahtes eine Induktivität eines Eingangsendes der Antenne ist.

4.  Frontmodul nach einem der Ansprüche 1 bis 3, wobei sich die Induktivität des Drahtes gemäß einer Länge des Drahtes ändert.

5.  Frontmodul nach einem der Ansprüche 1 bis 4, wobei das vorbestimmte Frequenzband eine Tx- oder Rx-Inbandfrequenz umfasst.

6.  Frontmodul nach einem der Ansprüche 1 bis 5, wobei der Draht zwei oder mehrere Drähte umfasst.

7.  Frontmodul nach einem der Ansprüche 1 bis 6, ferner umfassend eine elektrostatische Entladungs- (ESD) Schutzvorrichtung, welche die inneren Bauteile vor einer elektrostatischen Entladung schützt, die von einem Eingangsende der Antenne (110) eingegeben wird.

8.  Frontmodul nach einem der Ansprüche 1 bis 7, ferner umfassend:

    mindestens ein Tiefpassfilter (LPF) (151, 152), welches das RF-Signal filtert, wenn das RF-Signal von der RF-Schalteinheit auf den Tx-Kanal geschaltet wird; und
    mindestens ein akustisches Oberflächenwellen- (SAW) Filter (153, 154, 155), welches das RF-Signal filtert, wenn das RF-Signal von der RF-Schalteinheit (130) auf den Rx-Kanal geschaltet wird.

9.  Frontmodul nach einem der Ansprüche 1 bis 8, ferner umfassend eine Decodierungseinheit (135), die den Schaltvorgang und andere Vorgänge der RF-Schalteinheit (130) steuert.

10. Frontmodul nach einem der Ansprüche 1 bis 9, wobei das Mehrband-RF-Signal mindestens zwei umfasst von einem GSM-Band- (globales System für mobile Kommunikation) RF-Signal, einen EGSM-Band (erweitertes GSM) RF-Signal, einem DCS-Band- (digitales Mobilfunknetz) RF-Signal und einem PCS-Band- (persönlicher Kommunikationsdienst) RF-Signal.

11. Frontmodul nach einem der Ansprüche 1 bis 10, ferner umfassend eine Schutzschicht (178) auf einer oberen Oberfläche des Substrats (170).

**12.** Frontmodul nach einem der Ansprüche 1 bis 11, wobei der Draht eine Länge von ungefähr 0,5 mm bis ungefähr 1,5 mm aufweist.

**13.** Frontmodul nach einem der Ansprüche 1 bis 12, wobei der Draht aus Gold oder Aluminium gebildet ist.

**14.** Frontmodul nach Anspruch 4, wobei die Induktivität des Drahtes eine LC-Resonanz auf einer Inbandfrequenz zusammen mit der parasitären Kapazität bildet.

**15.** Frontmodul nach Anspruch 14, wobei der Draht eine Länge aufweist, die der parasitären Kapazität entspricht.

**16.** Frontmodul nach Anspruch 8, wobei der Draht ein erster Draht ist, und wobei die LPF- oder SAW-Filter jeweils mit Tx- oder Rx-Kanälen der RF-Schalteinheit über zweite Drähte (145) verbunden sind.

**17.** Frontmodul nach Anspruch 16, wobei eine Induktivitätsdifferenz zwischen Frequenzbändern durch die Längen der zweiten Drähte (145) ausgeglichen wird.

**18.** Frontmodul nach einem der Ansprüche 1 bis 17, wobei eine Größenordnung der parasitären Kapazität zu den Größen der Anschlussflächen (171, 132) proportional ist.

**19.** Verfahren zum Herstellen eines Frontmoduls, umfassend folgende Schritte:

Montieren eines Mehrband-RF-Schalt-Chips (130) auf ein Substrat (110); und
Montieren einer Filtereinheit (150) auf das Substrat (110);
Verbinden eines Endes eines Drahtes (120, a1) mit einer Anschlussfläche (171) eines Eingangsendes (111) einer Antenne (110) und des anderen Endes mit einer Anschlussfläche (132) der RF-Schalteinheit (130),
wobei sich die Induktivität des Drahtes (120; a1) gemäß der Länge des Drahts ändert,
wobei die Induktivität des Drahtes (120, a1) mit einer parasitären Kapazität der Anschlussflächen interagiert, um auf einer Mehrband-Inband-Tx- oder Rx-Frequenz eine LC-Resonanz zu bilden.

**Revendications**

**1.** Module frontal (FEM) comprenant :

un substrat (170) ;
une unité de commutation RF (130) commutant un signal RF multi-bande entre des canaux Tx et Rx et montée sur le substrat (170) ; et
un fil (120, a1) reliant électriquement l'unité de commutation RF (130) et une extrémité d'entrée (111) d'une antenne (110) ; et
une unité de filtre (150) reliée à l'unité de commutation RF (130),

**caractérisé en ce que**
le fil (120, a1) est relié à une extrémité à un plot de liaison (171) de l'extrémité d'entrée (111) de l'antenne (110) et est relié à l'autre extrémité à un plot de liaison (132) de l'unité de commutation RF (130), et
le fil (120, a1) génère une inductance qui interagit avec une capacité parasite mesurée entre les deux extrémités du fil pour donner une résonance LC dans une bande de fréquences prédéterminée.

**2.** Module frontal selon la revendication 1, dans lequel le substrat comprend une carte en céramique à cuisson simultanée à basse température (LTCC).

**3.** Module frontal selon la revendication 1 ou 2, dans lequel l'inductance du fil est une inductance d'une extrémité d'entrée de l'antenne.

**4.** Module frontal selon l'une quelconque des revendications 1 à 3, dans lequel l'inductance du fil est changée en fonction d'une longueur du fil.

**5.** Module frontal selon l'une quelconque des revendications 1 à 4, dans lequel la bande de fréquences prédéterminée comprend une fréquence en bande Tx ou Rx.

**6.** Module frontal selon l'une quelconque des revendications 1 à 5, dans lequel le fil comprend deux fils ou plus.

**7.** Module frontal selon l'une quelconque des revendications 1 à 6, comprenant en outre une unité de protection contre les décharges électrostatiques (ESD) protégeant les composants internes contre une entrée de décharge électrostatique provenant d'une extrémité d'entrée de l'antenne (110).

**8.** Module frontal selon l'une quelconque des revendications 1 à 7, comprenant en outre :

au moins un filtre passe-bas (LPF) (151, 152) filtrant le signal RF lorsque le signal RF est commuté sur le canal Tx par l'unité de commutation RF ; et
au moins un filtre d'onde acoustique de surface (SAW) (153, 154, 155) filtrant le signal RF lorsque le signal RF est commuté sur le canal Rx par l'unité de commutation RF (130).

**9.** Module frontal selon l'une quelconque des revendications 1 à 8, comprenant en outre une unité de décodage (135) commandant l'opération de commutation et d'autres opérations de l'unité de commutation RF (130).

**10.** Module frontal selon l'une quelconque des revendications 1 à 9, dans lequel le signal RF multi-bande comprend au moins deux signaux parmi un signal RF de bande de système global de communication mobile (GSM), un signal RF de bande de système global étendu de communication mobile (EGSM), un signal RF de bande de système cellulaire numérique (DCS) et un signal RF de bande de service de communication personnel (PCS).

**11.** Module frontal selon l'une quelconque des revendications 1 à 10, comprenant en outre une couche de protection (178) sur une surface supérieure du substrat (170).

**12.** Module frontal selon l'une quelconque des revendications 1 à 11, dans lequel le fil a une longueur d'environ 0,5 mm à environ 1,5 mm.

**13.** Module frontal selon l'une quelconque des revendications 1 à 12, dans lequel le fil est constitué d'or ou d'aluminium.

**14.** Module frontal selon la revendication 4, dans lequel l'inductance du fil donne une résonance LC à une fréquence en bande avec la capacité parasite.

**15.** Module frontal selon la revendication 14, dans lequel le fil a une longueur correspondant à la capacité parasite.

**16.** Module frontal selon la revendication 8, dans lequel le fil est un premier fil, et les filtres LPF ou SAW sont respectivement reliés aux canaux Tx ou Rx de l'unité de commutation RF par des deuxièmes fils (145).

**17.** Module frontal selon la revendication 16, dans lequel une différence d'inductance entre des bandes de fréquences est compensée par les longueurs des deuxièmes fils (145).

**18.** Module frontal selon l'une quelconque des revendications 1 à 17, dans lequel une grandeur de la capacité parasite est proportionnelle aux tailles des plots de liaison (171, 132).

**19.** Procédé de fabrication d'un module frontal, comprenant :

le montage d'une puce de commutation RF multi-bande (130) sur un substrat (110) ; et
le montage d'une unité de filtre (150) sur le substrat (110) ;
le branchement d'une extrémité d'un fil (120, a1) à un plot de liaison (171) d'une extrémité d'entrée (111) d'une antenne (110) et de l'autre extrémité à un plot de liaison (132) de l'unité de commutation RF (130),
dans lequel l'inductance du fil (120, a1) est changée en fonction de la longueur du fil,
dans lequel l'inductance du fil (120, a1) interagit avec une capacité parasite des plots de liaison pour donner une résonance LC à une fréquence en bande Tx ou Rx multi-bande.

【Figure 1】

【Figure 2】

【Figure 3】

【Figure 4】

【Figure 5】

【Figure 6】

**EP 1 867 061 B1**

**Patent documents cited in the description**

- US 20040248539 A1
- US 6600385 B2